# EUROPEAN PATENT SPECIFICATION

(11) **EP 0 949 034 B1**
(45) Date of publication and mention of the grant of the patent: **23.06.2004**
(21) Application number: 99850045.8
(22) Date of filing: 23.03.1999
(51) Int. Cl.: B23D 61/12, B23D 61/02

(54) **Sawblade with unequal distance beween tooth groups**
Sägeblatt mit unterschiedlichen Distanzen zwischen Zahngruppen
Lame de scie ayant des groupes de dents à distances différentes

(30) Priority: 10.04.1998 US 58358
(43) Date of publication of application: 13.10.1999
(73) Proprietor: Kapman AB, 811 81 Sandviken (SE)
(72) Inventor: Hayden, Robert C., Sr., Branford, Connecticut 06405 (US)
(74) Representative: Johansson Webjörn, Ingmari

(56) References cited:
- WO-A-94/09936
- US-A- 4 311 075

## Description

### Background

The present invention relates to a bandsaw blade according to the preamble of claim 1 and as known for example from US-A-4 311 075.

It is long known that bandsaws for sawing thick metal should preferably have teeth with different pitch distances, to avoid vibration and corrugation of the cut sides. For reasons related to production and maintenance of the sawblade, the teeth are then produced in recurrent groups, with variations of pitch distances, setting and height within the groups. It is also known that in general the vibration damping and the cutting ability are best if the recurrent group consists of a large number of teeth, often seven or more.
In production of the sawblade the first operation is milling, grinding or punching simultaneously the whole tooth group with the desired pitch distance and height. Very long recurrent groups will then require large milling cutters, heavy milling machinery and very strong clamping of the sawblade.

It is also known from US 4,827,822 that a long six tooth group can be achieved by combining a short recurrent pitch and height group with three teeth with another short recurrent setting group with two teeth. As long as each tooth is individually set this is feasible, but if it is desired to do the setting simultaneously for the setting group of two, the setting hammers will strike the teeth differently because the pitch distance is different and varies according to the pitch and height group.

The present invention concerns a bandsaw blade with a short recurrent tooth group where the pitch distances, the heights and the setting are equal from one group to another, but the same effect as a very long recurrent group is achieved by varying the intervals between the short groups. This allows setting of the teeth with higher capacity and precision.

### Description

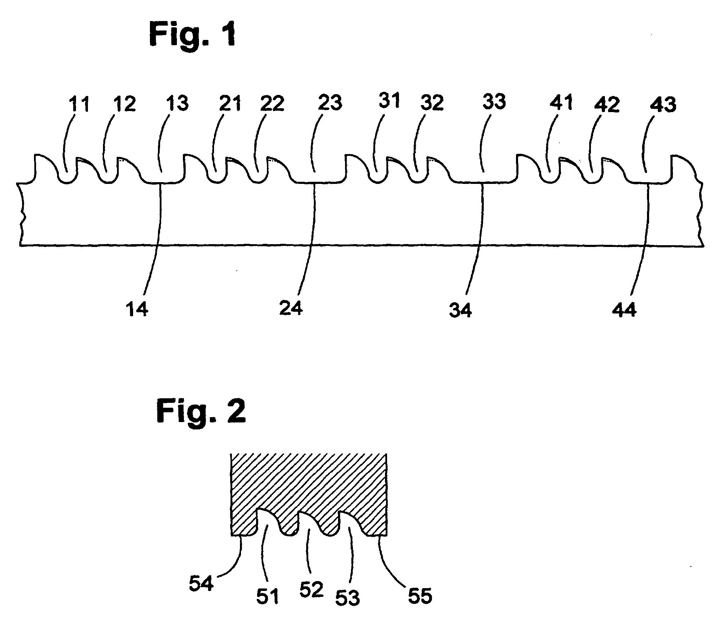

A bandsaw blade according to the invention is described with reference to figure 1, which shows a side view of the blade, and figure 2 which shows a tool for producing such a sawblade.

The teeth are arranged in groups, each group comprising the same number of teeth in the range from two to six. The figures show groups consisting of three teeth with pitch distances (11,12) which may be different within the group, but are the same in the other groups (21,22,31,32,41,42). The pitch distances are measured between the tips of the teeth. This makes it possible to have a simple punching, grinding or milling tool producing one group of teeth for each machine cycle, as shown in figure 2.

On the sawblade, the inter-group pitch distance (13,23,33,43) between the last tooth in one group and the first tooth in the following group is varied along the blade, randomly or according to a predetermined scheme. The front and rear slope of the teeth is constant and determined by the punching or milling tool, and the difference in inter-group pitch distance is achieved by varying the length of the gullet bottom (14,24,34,44). To do this, the blade blank is fed forward different amounts between machine cycles in production.

The production tool can be a grinding wheel, a milling cutter or a punch, and is made with grooves (51,52,53) representing the teeth of the group, and flat stretches (54,55) in front and rear of the tooth group. The flat stretches should have basically the same length, and by letting them overlap to small or large extent, gullet bottoms can be produced with lengths between one and two times the length of a flat stretch. The length of each flat stretch should be at least equal to the difference between the longest and the shortest inter-group pitch distance. If desired, two consecutive tools can be used to produce the rake and clearance faces separately in order to get a sharper edge, or one tool twice with a short displacement in between.

The forward feed between machine cycles may be varied to produce varying inter-group pitch distances (13,23,33,43) between groups. It should be avoided, however, to have inter-group pitch distances equal to multiples of the average pitch distanche within the group, since that would cause vibrations.

A sawblade according to the invention can be easily set with high precision in either of two ways. If setting is done the traditional way one tooth at a time while indexing on a preceding tooth, preferably the leading tooth, and the number of teeth set in each direction within the recurring group is only one, the distance between index and setting anvil is constant and can be accurately adjusted. The same holds if the group contains two teeth set in each direction and the pitch distances are equal within the group, and the same indexing can be used.

If setting is done simultaneously for the whole group of teeth by using a multiple hammer and anvil and indexing on the leading tooth, a sawblade according to the invention allows a shorter group and a simpler smaller hammer, while getting the vibration damping characteristic of a much longer group.

Preferably, the recurrent group should comprise three or four teeth, one set to each direction and one or two straight. If two straight teeth are used, the leading one of them should have large chamfers and be higher than the other. If the recurrent group has three teeth and five different inter-group distances are used, the vibration damping corresponds to a fifteen tooth group, which is a considerable improvement without production difficulties.

## Claims

1. Bandsaw blade with teeth in recurrent groups, where all groups contain the same number of teeth, said number being from two to six, and where the teeth within one group have the same heights, setting and pitch distance as corresponding teeth in any other group, **characterized by** the inter-group pitch distance (13,23,33,43) from the last tooth in one group to the first tooth in the following group being different between successive pairs of groups.

2. Bandsaw blade according to claim 1, **characterized by** the bottom of the gullet between two successive groups comprising a generally flat portion (14,24,34,44) which is at least as long as the difference between the longest and the shortest inter-group pitch distance, and at most twice as long as that.

3. Bandsaw blade according to claim 1, **characterized by** the inter-group pitch distance being chosen sequentially among a limited number of distance values not coinciding with a multiple of the average pitch distance within the group.

4. Bandsaw blade according to claim 1, **characterized by** the inter-group pitch distance being chosen randomly while avoiding distance values coinciding with multiples of the average pitch distance within the group.

5. Bandsaw blade according to claim 3 or 4, **characterized by** the longest inter-group pitch distance (34) being less than twice the length of the shortest inter-group pitch distance (14).

## Patentansprüche

1. Blatt für eine Bandsäge mit Zähnen in wiederkehrenden Gruppen, wobei alle Gruppen dieselbe Anzahl von Zähnen enthalten, die Anzahl zwischen zwei und sechs liegt, wobei die Zähne innerhalb einer Gruppe dieselben Höhen, Schränk- und Teilungsabstand wie entsprechende Zähne in jeder anderen Gruppe haben, **dadurch gekennzeichnet, daß** der Zwischengruppenteilungsabstand (13, 23, 33, 43) von dem letzten Zahn in einer Gruppe zu dem ersten Zahn in der folgenden Gruppe zwischen aufeinanderfolgenden Paaren von Gruppen unterschiedlich ist.

2. Blatt für eine Bandsäge nach Anspruch 1, **dadurch gekennzeichnet, daß** der Boden der Zahnlücke zwischen zwei aufeinanderfolgenden Gruppen einen im wesentlichen flachen Abschnitt (14, 24, 34, 44) hat, der mindestens so lang ist wie der Abstand zwischen dem längsten und dem kürzesten Zwischengruppenteilungsabstand und maximal zweimal so lang wie dieser.

3. Blatt für eine Bandsäge nach Anspruch 1, **dadurch gekennzeichnet, daß** der Zwischengruppenteilungsabstand nacheinander unter einer begrenzten Anzahl von Abstandswerten ausgewählt wird, welche nicht mit einem Vielfachen des durchschnittlichen Teilungsabstandes innerhalb der Gruppe zusammenfallen.

4. Blatt für eine Bandsäge nach Anspruch 1, **dadurch gekennzeichnet, daß** der Zwischengruppenteilungsabstand regellos ausgewählt ist, während man vermeidet, daß die Abstandswerte mit Vielfachen des Durchschnittsteilungsabstandes innerhalb der Gruppe zusammenfallen.

5. Blatt für eine Bandsäge nach Anspruch 3 oder 4, **dadurch gekennzeichnet, daß** der längste Zwischengruppenteilungsabstand (34) kleiner ist als die doppelte Länge des kürzesten Zwischengruppenteilungsabstandes (14).

## Revendications

1. Lame de scie en bande avec des dents en groupes récurrents, dans laquelle tous les groupes contiennent le même nombre de dents, ce nombre allant de deux à six, et dans laquelle les dents dans un groupe ont les mêmes hauteurs, inclinaisons et distances de pas que les dents correspondantes dans tout autre groupe, **caractérisée par le fait que** la distance de pas intergroupes (13, 23, 33, 43) depuis la dernière dent d'un groupe jusqu'à la première dent du groupe suivant est différente entre des paires de groupes successives.

2. Lame de scie en bande selon la revendication 1, **caractérisée par le fait que** le fond du goulet entre deux groupes successifs comprend une partie globalement plate (14, 24, 34, 44) qui est au moins aussi longue que la différence entre la distance de pas intergroupes la plus longue et la plus courte, et au plus deux fois celle-ci.

3. Lame de scie selon la revendication 1, **caractérisée par le fait que** la distance de pas intergroupes est choisie séquentiellement parmi un nombre limité de valeurs de distance qui ne coïncident pas avec un multiple de la distance de pas moyenne dans le groupe.

4. Lame de scie selon la revendication 1, **caractérisée par le fait que** la distance de pas intergroupes est choisie de façon aléatoire en évitant des valeurs de distance coïncidant avec des multiples de la distance de pas moyenne dans le groupe.

5. Lame de scie en bande selon l'une des revendications 3 et 4, **caractérisée par le fait que** la longueur de pas intergroupes (34) est inférieure à deux fois la longueur de la distance de pas intergroupes la plus courte (14).
